# EUROPEAN PATENT APPLICATION

(11) **EP 3 970 848 A1**
(43) Date of publication of application: **23.03.2022**
(21) Application number: 20806007.9
(22) Date of filing: 09.04.2020
(51) Int. Cl.: B01J 14/00, B01J 19/24

(54) **CHEMICAL REACTION SYSTEM AND DEVICE SUITABLE FOR LOW-FLOW REACTIONS**

(30) Priority: 16.05.2019 JP 2019092518
(71) Applicant: Nisso Engineering Co., Ltd., Tokyo 101-0051 (JP)
(72) Inventor: KAJITA, Satoshi, Tokyo 101-0051 (JP)
(74) Representative: Ipsilon
(86) International application number: PCT/JP2020/015994
(87) International publication number: WO 2020/230491

(57) **Abstract**

A method for bringing at least two kinds of liquids into contact, comprising: continuously supplying a homogeneous or heterogeneous liquid comprising at least two kinds of liquids to a tube type vessel comprising a circulation flow path having a micrometer-sized or millimeter-sized inner diameter through a supply flow path at a flow rate of 0.01 to 500 cm³/min, circulating the supplied liquid in the circulation flow path at a flow rate [m³/sec] calculated by Rₑ × ν × A / D_{H}, wherein Rₑ is not less than 1000, ν is a dynamic viscosity coefficient [m²/sec] of the circulated liquid, A is a square measure [m²] of a cross section of the circulation flow path, D_{H} is a length [m] calculated by 4 × A / P, and P is a circumference [m] of the cross section of the circulation flow path, and continuously withdrawing the circulated liquid from the tube type vessel through the discharge flow path.

## Description

### TECHNICAL FIELD

The present invention relates to a method and an apparatus for bringing at least two kinds of liquids into contact, which are suitable for a chemical reaction, liquid-liquid extraction, etc. in a flow with a small flow rate.

### BACKGROUND ART

The micrometer- or millimeter- chemical process is a chemical process suitable for high-mix low-volume production. In particular, it is used for the production of pharmaceuticals and pharmaceutical intermediates, or the synthesis of organic compounds on a laboratory scale. The micrometer- or millimeter- chemical process comprises a micrometer sized or millimeter sized reactor, a micrometer sized or millimeter sized separator (such as a micrometer sized or millimeter sized distillation tower, a micrometer sized or millimeter sized extractor, etc.), a micrometer sized or millimeter sized mixer, a micrometer sized or millimeter- sized pump or the others. The characteristics of equipment used in the micrometer- or millimeter-chemical process are (1) the flow of fluid (gas, liquid) in the channel (inside the thin tube or in the narrow groove formed on the flat plate) is laminar flow and (2) The surface area per unit volume of the fluid is large. If the flow is a laminar flow, liquid-liquid contact may not be sufficiently performed in two incompatible liquids or two highly viscous liquids.

Aside from these, various loop type reactors are known. For example, Patent Document 1 discloses a manufacturing method of ethane dichloride, characterized in that a liquid reactant medium comprising a chlorinated hydrocarbon such as ethane dichloride as a main component is placed in a loop-type liquid circulation reactor, and ethylene and chlorine are introduced thereinto to be reacted while the liquid reactant medium is circulated, wherein a liquid amount control valve for a liquid circulation flow path is provided and a liquid circulation flow velocity is controlled in the range of 50 to 150 cm / sec.

Patent Document 2 discloses a loop-type two-phase immobilized enzyme reactor, characterized in that the reactor comprises a fixed bed reaction device filled with an immobilized enzyme, a two-phase separation tank configured to separate a reaction product obtained by the fixed bed reaction device into two phases of a hypobaric product and a hyperbaric product, a piping configured to return a part of the hypobaric product phase in the two-phase separation tank to the fixed bed reaction device, a piping configured to supply the reaction product obtained by the fixed bed reaction device to the two-phase separation tank, a piping configured for supplying a low specific gravity substrate and a high specific gravity substrate respectively to the two-phase separation tank, and a piping configured to discharge the hypobaric product and the hyperbaric product respectively from the two-phase separation tank.

Patent Document 3 discloses a method for catalytically aldol condensation of at least one aldehyde in a two-phase liquid reactant mixture in a loop type reactor, wherein the reactor comprises a reaction zone and a calming zone just above the reaction zone, wherein an aldehyde-containing phase dispersed in a continuous aqueous phase containing a catalyst is generated in the reaction zone, and the two-phase reactant mixture from the reaction zone is ascendingly flowed to the calming zone to be integrated, and a continuous organic phase is formed in the upper region of the calming zone.

Patent Document 4 teaches that a flow tube equipped with a mixing means or a loop type reactor provided with a high-speed rotary pump for mixing is suitable for a continuous method, and the extraction process can also be performed by the same device.

### CITATION LIST

### PATENT LITERATURES

PATENT DOCUMENT 1 : JP S61-27 A
PATENT DOCUMENT 2 : JP H08-24624 A
PATENT DOCUMENT 3 : JP 2016-503432 A
PATENT DOCUMENT 4 : JP H06-128189 A

### SUMMARY OF THE INVENTION

### PROBLEMS TO BE SOLVED BY THE INVENTION

One of the objects of the present invention is to provide a method and an apparatus for bringing at least two kinds of liquids into contact with each other, which are suitable for chemical reaction, liquid-liquid extraction, etc. in a flow with a small flow rate.

### MEANS FOR SOLVING THE PROBLEMS

As a result of studies for achieving the above objects, the present invention including the following aspects has been found.
[1] A method for bringing at least two kinds of liquids into contact, comprising:
   continuously supplying a homogeneous or heterogeneous liquid comprising at least two kinds of liquids to a looped tube type vessel comprising a circulation flow path having a micrometer-sized or millimeter-sized inner diameter through a supply flow path,
   circulating the supplied liquid in the circulation flow path at a flow rate to be turbulent condition in a region from a connection portion of the supply flow path and the circulation flow path to a connection portion of a discharge flow path and the circulation flow path, and
   continuously withdrawing the circulated liquid from the looped tube type vessel through the discharge flow path at a flow rate satisfying mass balance.
[2] A method for bringing at least two kinds of liquids into contact, comprising:
   continuously supplying a homogeneous or heterogeneous liquid comprising at least two kinds of liquids to a looped tube type vessel comprising a circulation flow path having a micrometer-sized or millimeter-sized inner diameter through a supply flow path at a flow rate of 0.01 to 500 cm³/min,
   circulating the supplied liquid in the circulation flow path at a flow rate [m³/sec] calculated by Rₑ × ν × A / D_{H} in a region from a connection portion of the supply flow path and the circulation flow path to a connection portion of a discharge flow path and the circulation flow path, wherein Rₑ is not less than 1000, v is a dynamic viscosity coefficient [m²/sec] of the circulated liquid, A is a square measure [m²] of a cross section of the circulation flow path in the region from the connection portion of the supply flow path and the circulation flow path to the connection portion of the discharge flow path and the circulation flow path, D_{H} is a length [m] calculated by 4 × A / P, and P is a circumference [m] of the cross section of the circulation flow path in the region from the connection portion of the supply flow path and the circulation flow path to the connection portion of the discharge flow path and the circulation flow path, and
   continuously withdrawing the circulated liquid from the looped tube type vessel through the discharge flow path at a flow rate satisfying mass balance.
[3] The method according to [1] or [2], wherein the supply flow path and discharge flow path have a micrometer-sized or millimeter-sized inner diameter.
[4] The method according to [1], [2] or [3], further comprising combining the at least two kinds of liquids to obtain the homogeneous or heterogeneous liquid.
[5] An apparatus for bringing at least two kinds of liquids into contact, comprising
   a looped tube type vessel comprising a circulation flow path having a micrometer-sized or millimeter-sized inner diameter,
   a supply flow path connected to the circulation flow path configured for continuously supplying a homogeneous or heterogeneous liquid comprising at least two kinds of liquids to the looped tube type vessel at a flow rate of 0.01 to 500 cm³/min,
   a displacement pump configured for circulating the supplied liquid in the circulation flow path at a flow rate [m³/sec] calculated by Rₑ × v × A / D_{H} in a region from a connection portion of the supply flow path and the circulation flow path to a connection portion of a discharge flow path and the circulation flow path, wherein Rₑ is not less than 1000, ν is a dynamic viscosity coefficient [m²/sec] of the circulated liquid, A is a square measure [m²] of a cross section of the circulation flow path in the region from the connection portion of the supply flow path and the circulation flow path to the connection portion of the discharge flow path and the circulation flow path, D_{H} is a length [m] calculated by 4 × A / P, and P is a circumference [m] of the cross section of the circulation flow path in the region from the connection portion of the supply flow path and the circulation flow path to the connection portion of the discharge flow path and the circulation flow path, and
   a discharge flow path connected to the circulation flow path configures for continuously withdrawing the circulated liquid from the looped tube type vessel at a flow rate satisfying mass balance.
[6] The apparatus according to [5], wherein the supply flow path and discharge flow path have a micrometer-sized or millimeter-sized inner diameter.
[7] The apparatus according to [5] or [6], further comprising a liquid preparation device configured for combining the at least two kinds of liquids to obtain the homogeneous or heterogeneous liquid.
[8] The apparatus according to any one of [5] to [7], wherein the supply flow path has a liquid agitation device.
[9] The apparatus according to any one of [5] to [8], wherein the circulation flow path has a liquid agitation device.

### ADVANTAGEOUS EFFECTS OF THE INVENTION

According to the present invention, since liquid-liquid contact can be efficiently performed even in a flow with a small flow rate, it is suitable for a chemical reaction, liquid-liquid extraction and the like. According to the present invention, since the residence time can be arbitrarily set, a high reaction ratio can be realized even in a chemical reaction having a slow reaction rate. The apparatus of the present invention is compact and has excellent safety.

In the present application, the homogeneous liquid is a mixed liquid of at least two kinds of liquids having high miscible with each other, such as water and methanol, water and acetone, and the other combinations. In the present application, the heterogeneous liquid is a liquid-liquid multiphase liquid or emulsion (milky juice) of at least two liquids having high immiscible with each other, such as water and oil, water and toluene, and the other combinations. The heterogeneous liquid usually has a continuous phase formed by one liquid and a dispersed phase formed by the other liquid.

In a flow path having a micrometer-sized or millimeter-sized inner diameter, a heterogeneous liquid having a large-size dispersed phase may have two liquid phases flowing alternately. Such flow is called a slug flow or a plug flow. In the slug flow state, the frequency of mutual contact between the two liquid phases may decrease. The method and apparatus of the present invention can be applied not only to homogeneous liquids but also to heterogeneous liquids. In the present application, the micrometer size or the millimeter size refers to a size generally called by one skilled in the art, for example, a size of 1 µm or more and less than 1000 mm, preferably a size of 10 µm or more and 100 mm or less, more preferably 100 µm or more and 50 mm or less, further preferably 0.3 mm or more and 10 mm or less, and even more preferably 0.5 mm or more and 5 mm or less.

### BRIEF DESCRIPTION OF THE DRAWINGS

FIG. 1 is a conceptual diagram which shows an example of the apparatus of the present invention.
FIG. 2 is a conceptual diagram which shows another example of the apparatus of the present invention.
FIG. 3 is a conceptual diagram which shows another example of the apparatus of the present invention.
FIG. 4 is a conceptual diagram which shows another example of the apparatus of the present invention.
FIG. 5 is a conceptual diagram which shows the experimental apparatus used in Examples 1 to 3.
FIG. 6 is a conceptual diagram which shows the experimental apparatus used in Example 4.

### EMBODIMENT FOR CARRYING OUT THE INVENTION

The present invention will be described with reference to the drawings.

The apparatus of the present invention comprises a supply flow path 1, a loop tube type vessel, and a discharge flow path 5.

The supply flow path 1 is a portion from each containers configured for storing at least two kinds of liquids respectively to the loop tube type vessel (hereinafter, may be referred to as loop tube type reactor). The inner diameter of the supply flow path 1 is not particularly limited, but is preferably micrometer size or millimeter size.

The supply flow path 1 can be provided with a pump, an adsorption device, a dehydrating device, a degassing device, a filter (filter cloth, etc.), a stirring device, a liquid preparation device, a temperature controller, a cooler, a heater, etc., as necessary. As the stirring device, a static mixing device (also referred to as a static mixer) is preferably used.

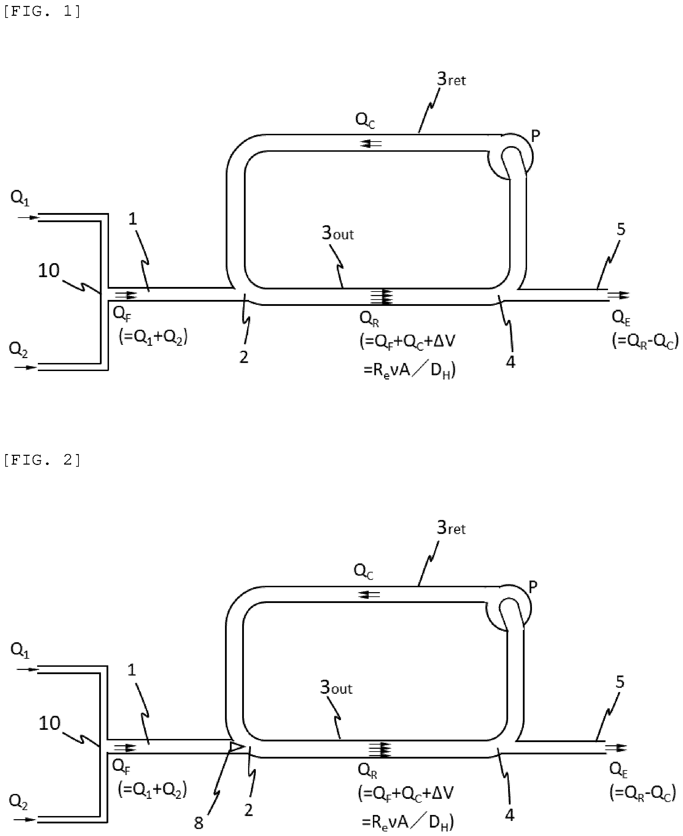

In the apparatus shown in FIG. 1, a first liquid is supplied from a first storage container (not shown) at a flow rate Q₁, and a second liquid is supplied from a second storage container (not shown) at a flow rate Q₂. They are combined at the confluence portion 10 and flow into the circulation flow path 3ₒᵤₜ, 3ᵣₑₜ at a connection portion 2 at a flow rate Q_{F}. A commercially available stirring device (for example, Nisso Engineering Co. Ltd. "MILLIREACTOR" or the like) may be used or an apparatus such as an ejector may be provided, in the confluence portion 10 and the connection portion 2, in order to facilitate mixing of the two liquids. The ejector is a device that can suck in a low-pressure fluid (liquid or gas) by using the force of a high-pressure fluid and discharge the fluids at a medium pressure. If the volume does not change with mixing, the flow rate Q_{F} is the sum of the flow rate Q₁ and the flow rate Q₂. The liquid preparation device is configured for combining at least two kinds of raw material liquids to obtain a homogeneous liquid or a heterogeneous liquid comprising at least two kinds of liquids. The liquid preparation device configured for combining at least two kinds of raw material liquids to obtain a homogeneous liquid or a heterogeneous liquid comprising the at least two kinds of liquids may be a simple confluence 10 formed by a tee or the like, it may be a mixer such as a microreactor or a millireactor, or it may be an emulsifier, a disperser or the like provided with a container and a stirring mechanism.

The loop tube type reactor comprises a circulation flow path. The circulation flow path starts from the connection portion 2 which is connected to the supply flow path 1, passes through the connection portion 4 which is connected to the discharge flow path 5, and returns to the connection portion 2 again, which is a loop type flow path. In the present application, for the sake of brevity, the region from the connection portion 2 to the connection portion 4 is referred to as an outward flow path 3ₒᵤₜ, and the region from the connection portion 4 to the connection portion 2 is referred to as a return flow path 3ᵣₑₜ. The entire loop-type flow path is called a circulation flow path. In the circulation flow path, the inner diameter of the at least outward flow path 3ₒᵤₜ is preferably micrometer-size or millimeter-size, and the inner diameters of both the outward flow path 3ₒᵤₜ and the returning flow path 3ᵣₑₜ are more preferably micrometer-size or millimeter-size.

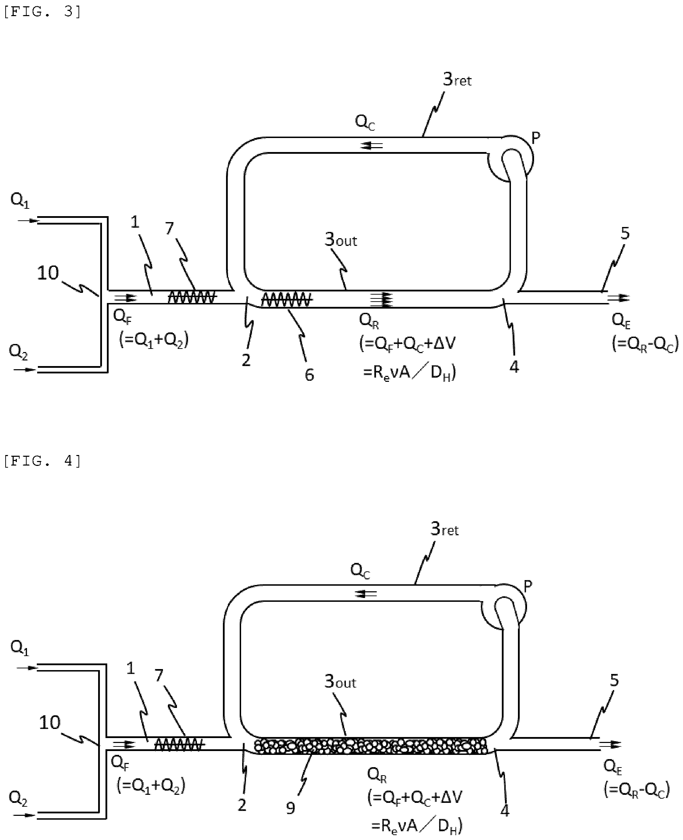

If necessary, the circulation flow path may be provided with a pump, a filter (filter cloth, etc.), a stirring device, a cooler, a heater, a temperature controller, and the like. The pump is preferably provided in the return flow path 3ᵣₑₜ. The pump P is preferably a displacement pump because it can flow a liquid at an accurate flow rate. Examples of the displacement pumps can include reciprocating pumps such as piston pumps, plunger pumps and diaphragm pumps, and rotary pumps such as gear pumps, vane pumps and screw pumps. Of these, the plunger pump is preferable because it can handle a minute flow rate. As shown in FIG. 3, it is preferable to provide the inline mixer 6 as stirring device in the outward flow path 3ₒᵤₜ. As the stirring device, a static mixing device is preferably used. As shown in FIG. 2, in order to facilitate mixing of the liquid from the supply flow path 1 and the liquid from the return flow path 3ᵣₑₜ, in the connection portion 2, a device such as an ejector 8 or a commercially available mixing device (For example, "MILLIREACTOR" manufactured by Nisso Engineering Co., Ltd., etc.) may be provided.

Further, the filling 9 can be packed in the circulation flow path, preferably in the outward flow path 3ₒᵤₜ (see FIG. 4). The filling can facilitate mixing. The filling may be one that does not contribute to the chemical reaction, or may be one that contributes to the chemical reaction. Examples of those that contribute to the chemical reaction can include catalysts, adsorbents and the others. The shape of the filling is not particularly limited, and examples thereof can include a granular shape, a needle shape, a plate shape and the others. In the apparatus shown in FIG. 1, the flow rate Q_{R} of the liquid in the outward flow path 3ₒᵤₜ is the sum of the flow rate Q_{F} of the liquid from the supply flow path 1, the flow rate Q_{c} of the liquid from the return flow path 3ᵣₑₜ and a volume change ΔV if there is the volume change due to a chemical reaction or the like.

The discharge flow path 5 is a flow path starting from the connection portion 4 and extending to the outside of the system of the apparatus of the present invention. If necessary, the discharge flow path 5 can be provided with a pump, a gas-liquid separator, a liquid-liquid separator, an emulsion breaking device, a filter (filter cloth), a stirring device, a temperature controller, a cooler, a heater, a damper, and a back pressure regulator or the like. The inner diameter of the discharge flow path 5 is not particularly limited, but is preferably micrometer size or millimeter size. In the apparatus shown in FIG. 1, the flow rate Q_{E} of the liquid in the discharge flow path 5 is obtained by subtracting the flow rate Q_{c} of the liquid in the return flow path 3ᵣₑₜ from the flow rate Q_{R} of the liquid in the outward flow path 3ₒᵤₜ. The damper 12 can be appropriately used in order to suppress the pulsation generated by the reciprocating pump.

In the apparatus shown in FIG. 1, the circulation flow path, the supply flow path 1 and the discharge flow path 5 are generally straight flow paths, but may be coil-shaped or zigzag-shaped flow paths.

The method of the present invention, comprises continuously supplying a homogeneous or heterogeneous liquid comprising at least two kinds of liquids through a supply flow path 1 into a loop tube type vessel having a circulation flow path having a micrometer-sized or millimeter-sized inner diameter, circulating the supplied liquid in the circulation flow path at a flow rate to be turbulent condition in a region (outward flow path 3ₒᵤₜ) from a connection portion 2 of the supply flow path 1 and the circulation flow path to a connection portion 4 of a discharge flow path 5 and the circulation flow path 3, and continuously withdrawing the circulated liquid from the looped tube type vessel through the discharge flow path 5 at a flow rate satisfying mass balance.

In one embodiment of the present invention, the flow rate Q_{F} of the liquid in the supply flow path 1 is determined by the supply amount of at least two kinds of liquids supplied from the storage containers, and the state of the flow may be a laminar flow or a turbulent flow. The laminar flow means a flow in which the fluid moves regularly, and the flow line of the fluid is always parallel to the pipe axis in a straight pipe having a circular cross section.

In one embodiment of the present invention, the flow rate Q_{R} of the liquid in the outward flow path 3ₒᵤₜ is in a range that the liquid flow in the outward flow path 3ₒᵤₜ becomes turbulent flow. Turbulent flow refers to a flow in which the velocity and pressure of a fluid fluctuate irregularly. Liquid-liquid contact is promoted by setting the flow rate to be turbulent flow.

In a preferred embodiment of the present invention, the flow rate Q_{F} of the liquid in the supply flow path is set to usually 0.01 to 500 cm³ / min, more preferably 0.1 to 100 cm³ / min, and even more preferably 1 to 50 cm³ / min. Further, in a preferred embodiment of the present invention, the flow rate Q_{R} of the liquid in the outward flow path 3ₒᵤₜ is set to the flow rate [m³/sec] calculated by Rₑ × ν × A / D_{H}.

Re is 1000 or more, preferably 1300 or more, more preferably 1800 or more, v is a dynamic viscosity coefficient [m²/sec] of the circulated liquid, A is a square measure [m²] of a cross section of the circulation flow path in the region from the connection portion 2 of the supply flow path 1 and the circulation flow path 3 to the connection portion 4 of the discharge flow path 5 and the circulation flow path 3, D_{H} is a length [m] calculated by 4 × A / P, and P is a circumference [m] of the cross section of the circulation flow path in the region from the connection portion 2 of the supply flow path 1 and the circulation flow path 3 to the connection portion 4 of the discharge flow path 5 and the circulation flow path 3.

The liquid flow rate Q_{E} in the discharge flow path 5 is a flow rate that satisfies the mass balance. The average residence time in the loop tube reactor is a value obtained by dividing the capacity of the circulation flow path by the flow rate Q_{F} or Q_{E}. Rₑ is a dimensionless number called REYNOLDS number in the field of chemical engineering, and is a value defined by Rₑ = (D_{H} × Q_{R}) / (ν × A). The larger the REYNOLDS number is, the more turbulent the flow tends to be.

Next, the effect of the present invention will be shown by experimental examples.

### (Example 1)

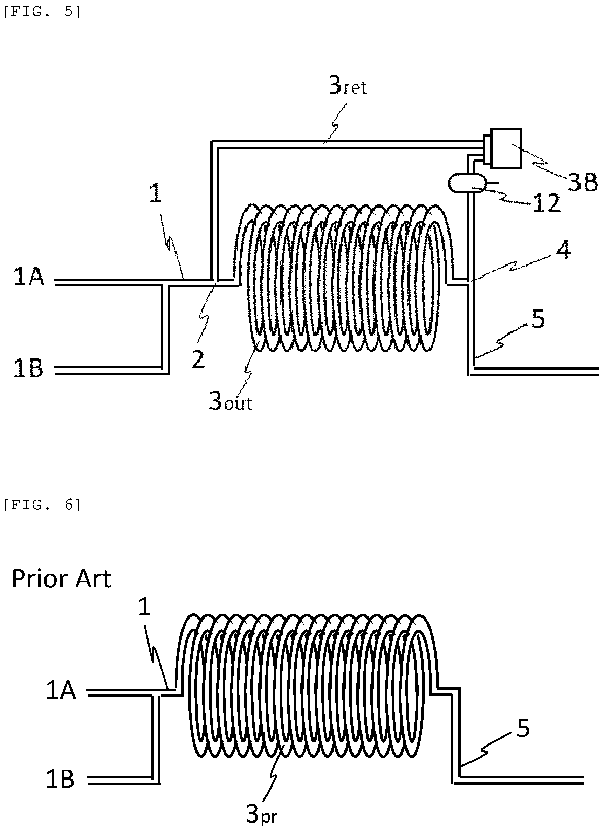

A liquid-liquid contact experiment was performed using the experimental device shown in FIG. 5. A circulation flow path having a capacity of 20 ml was prepared wherein the circulation flow path was composed of a spiral-shaped outward flow path 3ₒᵤₜ consisting of a 1/8 inch tube (outer diameter 3.18 mm, inner diameter 2.17 mm) and had a spiral diameter of 200 mm, and a return flow path 3ᵣₑₜ consisting of a 1/8 inch tube. Circulation pump 3B (double plunger pump manufactured by Nippon Exact Science Co., Ltd., NP-HX-200, maximum discharge pressure 10 MPa) and pulsation damping damper 12 (1/2 inch-PFA tube (Inner diameter 9 mm)) were installed in the return flow path 3ᵣₑₜ. The supply flow path 1 was connected to the connection portion 2 between the inlet of the outward flow path 3ₒᵤₜ and the outlet of the return flow path 3ᵣₑₜ. The discharge flow path 5 was connected to the connection portion 4 between the outlet of the outward flow path 3ₒᵤₜ and the inlet of the return flow path 3ᵣₑₜ. Although not shown, a back pressure regulator (nitrogen gas pressurization, inert gas seal pressure control automatic valve) was installed to the discharge flow path 5.

To the circulation flow path via the supply flow path 1, a toluene solution 1A of 92 ppm benzoic acid and an aqueous solution 1B of 80 ppm 4-methoxyphenol sodium salt were continuously supplied, at 5.0 ml / min, respectively, using pulseless flow plunger pump (manufactured by Nippon Exact Science Co., Ltd., NP-KX-500, maximum discharge pressure 35 MPa). A part of the liquid that passed through the outward flow path 3ₒᵤₜ was continuously discharged through the discharge flow path 5 at 10 ml/min. The average residence time in the circulation flow path was about 2 minutes. Using a circulation pump, the rest of the liquid that passed through the outward flow path 3ₒᵤₜ was continuously supplied to the inlet of the outward flow path 3ₒᵤₜ via the return flow path 3ᵣₑₜ at 50.0 ml/min. The REYNOLDS number in the outward flow path 3ₒᵤₜ was 670. The REYNOLDS number was calculated by the formula: Rₑ = ρ × u × D ÷ µ. Here, ρ is the fluid density, u is the fluid linear velocity in the tube, D is the inner diameter of the tube, and µ is the fluid viscosity.

Toluene appears to dissolve in water at about 0.5 g/L (25°C). Water appears to be slightly soluble in toluene. Benzoic acid appears to be mostly present as a bimolecular aggregate in a toluene solution and contain a small amount of un-aggregated benzoic acid molecules. Benzoic acid dissolves in water at 3.4 g/L and appears to contain most of the un-aggregated benzoic acid molecules present in aqueous solution with slight ion dissociation. 4-methoxyphenol seems to dissolve in water at about 40 g/L (25°C).

When the 4-methoxyphenol sodium salt in the aqueous solution comes into contact with benzoic acid in the toluene solution, the following chemical reaction occurs to produce 4-methoxyphenol and sodium benzoate.

NaOC₆H₄OCH₃ + C₆H₅COOH → HOC₆H₄OCH₃ + C₆H₅COONa

Since 4-methoxyphenol is easily dissolved in toluene and sodium benzoate is easily dissolved in water, a part of the produced sodium benzoate moved from the toluene phase to the aqueous phase, and a part of the produced 4-methoxyphenol moved from the aqueous phase to the toluene phase.

When 15 minutes had passed from the start of liquid-liquid contact, 4-methoxyphenol in the aqueous phase and the toluene phase discharged through the discharge flow path was quantified respectively by the internal standard method of the gas chromatogram. The reaction ratio was 74.5% and the extraction ratio was 48.9%.

The reaction ratio is a value calculated by the formula: reaction ratio = (Q_{b} + Qₐ) / (Q_{1B}) × 100.

The extraction ratio is a value calculated by the formula: extraction ratio = (Qₐ) / (Q_{1B}) × 100. Q_{b} = mass flow rate of 4-methoxyphenol in the discharged aqueous phase.

Qₐ = mass flow rate of 4-methoxyphenol in the discharged toluene phase.

Q_{1B} = mass flow rate in terms of 4-methoxyphenol in the supplied aqueous solution 1B.

### (Example 2)

Liquid-liquid contact was performed in the same manner as Example 1 except that the flow rate of the liquid supplied from the outlet of the outward flow path 3ₒᵤₜ to the inlet of the outward flow path 3ₒᵤₜ via the return flow path 3ᵣₑₜ was changed from 50.0 ml/min to 100.0 ml/min using the circulation pump. The REYNOLDS number in the outward flow path 3ₒᵤₜ was 1240, and the average residence time in the circulation flow path was about 2 minutes. The reaction ratio was 75.9% and the extraction ratio was 53.2%.

### (Example 3)

Liquid-liquid contact was performed in the same manner as Example 1 except that the flow rate of the liquid supplied from the outlet of the outward flow path 3ₒᵤₜ to the inlet of the outward flow path 3ₒᵤₜ via the return flow path 3ᵣₑₜ was changed from 50.0 ml/min to 150.0 ml/min using the circulation pump. The REYNOLDS number in the outward flow path 3ₒᵤₜ was 1800, and the average residence time in the circulation flow path was about 2 minutes. The reaction ratio was 100.0% and the extraction ratio was 69.5%.

### (Example 4)

The experimental equipment shown in FIG. 6 was used.

A spiral-shaped one-pass flow path 3ₚᵣ having a capacity of 20 ml was prepared wherein the one-pass flow path was composed of a 1/8 inch tube (outer diameter 3.18 mm, inner diameter 2.17 mm) and had a spiral diameter of 200 mm.

Supply flow path 1 was connected to the inlet of the one-pass flow path 3ₚᵣ. The discharge flow path 5 was connected to the outlet of the flow path 3ₚᵣ. Although not shown, a back pressure regulator (nitrogen gas pressurization, inert gas seal pressure control automatic valve) was installed to the discharge flow path.

Toluene solution 1A of 92ppm benzoic acid and aqueous solution 1B of 80ppm 4-methoxyphenol sodium salt were continuously supplied at 5.0 ml/min, respectively, using a pulseless flow plunger pump (manufactured by Nippon Exact Science Co., Ltd., NP-KX-500, a maximum discharge pressure of 35 MPa), to the one-pass flow path 3ₚᵣ via the supply flow path 1. The liquid that passed through the one-pass flow path 3ₚᵣ was continuously discharged through the discharge flow path 5 at 10 ml/min. The REYNOLDS number in the one-pass flow path 3ₚᵣ was 110, and the average residence time in the one-pass flow path 3ₚᵣ was about 2 minutes. The reaction ratio was 73.9% and the extraction ratio was 50.0%.

### (Example 5)

In a separatory funnel, 75 ml of a toluene solution of 92 ppm benzoic acid and 75 ml of an aqueous solution of 80 ppm of 4-methoxyphenol sodium salt were placed and shaken for about 2 to 3 minutes. Then, the separatory funnel was allowed to stand. The reaction ratio was 78.3% and the extraction ratio was 57.4%.

The apparatus of the present invention is not limited to the embodiment shown in the drawings, and the shape, size, color, and material of each part constituting the apparatus of the present invention may be changed, or the apparatus of the present invention may be provided with well-known or commonly used parts. These embodiments may be also included in the technical scope of the present invention.

### CODE DESCRIPTION

1 : Supply flow path
2 : Connection portion of supply flow path and circulation flow path
3ₒᵤₜ : Outward flow path
3ᵣₑₜ : Return flow path
4 : Connection portion of discharge flow path and circulation flow path
5 : Discharge flow path
6,7 : Inline mixer
8 : Ejector
9 : Filling
10 : Confluence portion
P : Displacement pump
12 : Pulsation damping damper
3B : Circulation pump
3ₚᵣ : One-pass flow path

## Claims

1. A method for bringing at least two kinds of liquids into contact, comprising:
continuously supplying a homogeneous or heterogeneous liquid comprising at least two kinds of liquids to a looped tube type vessel comprising a circulation flow path having a micrometer-sized or millimeter-sized inner diameter through a supply flow path,
circulating the supplied liquid in the circulation flow path at a flow rate to be turbulent condition in a region from a connection portion of the supply flow path and the circulation flow path to a connection portion of a discharge flow path and the circulation flow path, and
continuously withdrawing the circulated liquid from the looped tube type vessel through the discharge flow path at a flow rate satisfying mass balance.

2. A method for bringing at least two kinds of liquids into contact, comprising:
continuously supplying a homogeneous or heterogeneous liquid comprising at least two kinds of liquids to a looped tube type vessel comprising a circulation flow path having a micrometer-sized or millimeter-sized inner diameter through a supply flow path at a flow rate of 0.01 to 500 cm³/min,
circulating the supplied liquid in the circulation flow path at a flow rate [m³/sec] calculated by Rₑ × ν × A / D_{H} in a region from a connection portion of the supply flow path and the circulation flow path to a connection portion of a discharge flow path and the circulation flow path, wherein Rₑ is not less than 1000, v is a dynamic viscosity coefficient [m²/sec] of the circulated liquid, A is a square measure [m²] of a cross section of the circulation flow path in the region from the connection portion of the supply flow path and the circulation flow path to the connection portion of the discharge flow path and the circulation flow path, D_{H} is a length [m] calculated by 4 × A / P, and P is a circumference [m] of the cross section of the circulation flow path in the region from the connection portion of the supply flow path and the circulation flow path to the connection portion of the discharge flow path and the circulation flow path, and
continuously withdrawing the circulated liquid from the looped tube type vessel through the discharge flow path at a flow rate satisfying mass balance.

3. The method according to claim 1 or 2, wherein the supply flow path and discharge flow path have a micrometer-sized or millimeter-sized inner diameter.

4. The method according to claim 1, 2 or 3, further comprising combining the at least two kinds of liquids to obtain the homogeneous or heterogeneous liquid.

5. An apparatus for bringing at least two kinds of liquids into contact, comprising
a looped tube type vessel comprising a circulation flow path having a micrometer-sized or millimeter-sized inner diameter,
a supply flow path connected to the circulation flow path configured for continuously supplying a homogeneous or heterogeneous liquid comprising at least two kinds of liquids to the looped tube type vessel at a flow rate of 0.01 to 500 cm³/min,
a displacement pump configured for circulating the supplied liquid in the circulation flow path at a flow rate [m³/sec] calculated by Rₑ × ν × A / D_{H} in a region from a connection portion of the supply flow path and the circulation flow path to a connection portion of a discharge flow path and the circulation flow path, wherein Rₑ is not less than 1000, v is a dynamic viscosity coefficient [m²/sec] of the circulated liquid, A is a square measure [m²] of a cross section of the circulation flow path in the region from the connection portion of the supply flow path and the circulation flow path to the connection portion of the discharge flow path and the circulation flow path, D_{H} is a length [m] calculated by 4 × A / P, and P is a circumference [m] of the cross section of the circulation flow path in the region from the connection portion of the supply flow path and the circulation flow path to the connection portion of the discharge flow path and the circulation flow path, and
a discharge flow path connected to the circulation flow path configures for continuously withdrawing the circulated liquid from the looped tube type vessel at a flow rate satisfying mass balance.

6. The apparatus according to claim 5, wherein the supply flow path and discharge flow path have a micrometer-sized or millimeter-sized inner diameter.

7. The apparatus according to claim 5 or 6, further comprising a liquid preparation device configured for combining the at least two kinds of liquids to obtain the homogeneous or heterogeneous liquid.

8. The apparatus according to any one of claims 5 to 7, wherein the supply flow path has a liquid agitation device.

9. The apparatus according to any one of claims 5 to 8, wherein the circulation flow path has a liquid agitation device.
